# FASCICULE DE BREVET EUROPEEN

(11) **EP 3 398 803 B1**
(45) Date de publication et mention de la délivrance du brevet: **23.11.2022**
(21) Numéro de dépôt: 18169700.4
(22) Date de dépôt: 27.04.2018
(51) Int. Cl.: B60L 50/53, B60L 1/00

(54) **SYSTÈME D'ALIMENTATION ÉLECTRIQUE AUXILIAIRE POUR VÉHICULE FERROVIAIRE**
HILFSSTROMVERSORGUNGSSYSTEM FÜR SCHIENENFAHRZEUG
AUXILIARY POWER SUPPLY SYSTEM FOR A RAILWAY VEHICLE

(30) Priorité: 27.04.2017 FR 1753674
(43) Date de publication de la demande: 07.11.2018
(73) Titulaire: ALSTOM Transport Technologies, 93400 Saint-Ouen (FR)
(72) Inventeur: AL KAYAL, Fisal, 1780 Wemmel (BE)
(74) Mandataire: Lavoix

(56) Documents cités:
- EP-A1- 2 045 116
- EP-A1- 2 599 656
- US-A1- 2009 288 577
- US-A1- 2011 049 909
- US-A1- 2013 263 911

## Description

La présente invention concerne un système d'alimentation électrique auxiliaire destiné à équiper un véhicule ferroviaire.

L'invention concerne également un véhicule ferroviaire équipé du précédent système d'alimentation.

Les véhicules ferroviaires électriques tirent généralement d'une source extérieure l'énergie nécessaire à leur propulsion et au fonctionnement des circuits secondaires, comme l'électronique de contrôle, l'éclairage, ou la ventilation.

L'énergie est par exemple fournie par un réseau électrique de haute tension, à travers une caténaire s'étendant au-dessus des voies, ou bien à travers un ou plusieurs rails électrifiés situés entre les rails de roulement, selon les applications.

Une première partie de l'énergie délivrée par cette source extérieure est transmise au moteur par un convertisseur de puissance principal, et une autre partie est transmise aux circuits secondaires par un convertisseur de puissance secondaire.

La source d'énergie extérieure n'est pas toujours disponible. Par exemple parce que le réseau est en panne, ou encore parce que le véhicule se trouve dans un lieu où le réseau n'est pas accessible.

De manière à pallier ce cas, le véhicule est généralement muni d'un moteur secondaire, par exemple un moteur thermique, pour son déplacement jusqu'au raccordement à la source d'énergie extérieure. Il est connu d'équiper les véhicules d'un système d'alimentation auxiliaire comprenant une batterie pouvant se substituer temporairement à la source d'énergie externe. La batterie assure alors le démarrage du moteur secondaire, ainsi que l'alimentation des fonctions secondaires, jusqu'au raccordement du véhicule à la source d'énergie extérieure.

La batterie est rechargée une fois le véhicule raccordé à la source d'énergie externe, soit en étant connectée directement à la source extérieure, soit à travers le convertisseur de puissance secondaire.

Ces systèmes d'alimentation auxiliaire ne donnent pas entière satisfaction. En effet, le branchement d'une batterie pour sa recharge directement à la source d'énergie extérieure nécessite une isolation galvanique coûteuse. Quant au branchement de la batterie à une sortie du convertisseur de puissance secondaire, il provoque des pertes importantes dues à une consommation permanente de la batterie, ce qui réduit l'efficacité énergétique du convertisseur de puissance.

De plus, une telle batterie se décharge naturellement au cours de longues périodes d'immobilisation, et ne peut pas être rechargée en l'absence de la source extérieure.

Un but de l'invention est donc de fournir un système d'alimentation électrique auxiliaire pour un véhicule ferroviaire, à la mise en oeuvre simple et peu coûteuse, tout en préservant l'efficacité et la stabilité du système d'alimentation.

Ainsi, l'invention a pour objet un véhicule ferroviaire selon la revendication 1.

Selon des modes de réalisation particuliers, le véhicule ferroviaire selon l'invention présente l'une ou plusieurs des caractéristiques des revendications 2 à 10, prise(s) isolément ou selon toute combinaison techniquement réalisable.

Les documents EP2599656, EP2045116, US2009/288577 divulguent un véhicule ferroviaire fonctionnant avec une source d'énergie externe et comprenant une source d'énergie renouvelable.

L'invention sera mieux comprise à la lecture de la description qui va suivre, donnée uniquement à titre d'exemple, et faite en référence aux dessins annexés, parmi lesquels :
- la figure 1 est une vue schématique de côté d'un véhicule ferroviaire ; et
- la figure 2 est une représentation schématique d'un système d'alimentation électrique auxiliaire selon l'invention.

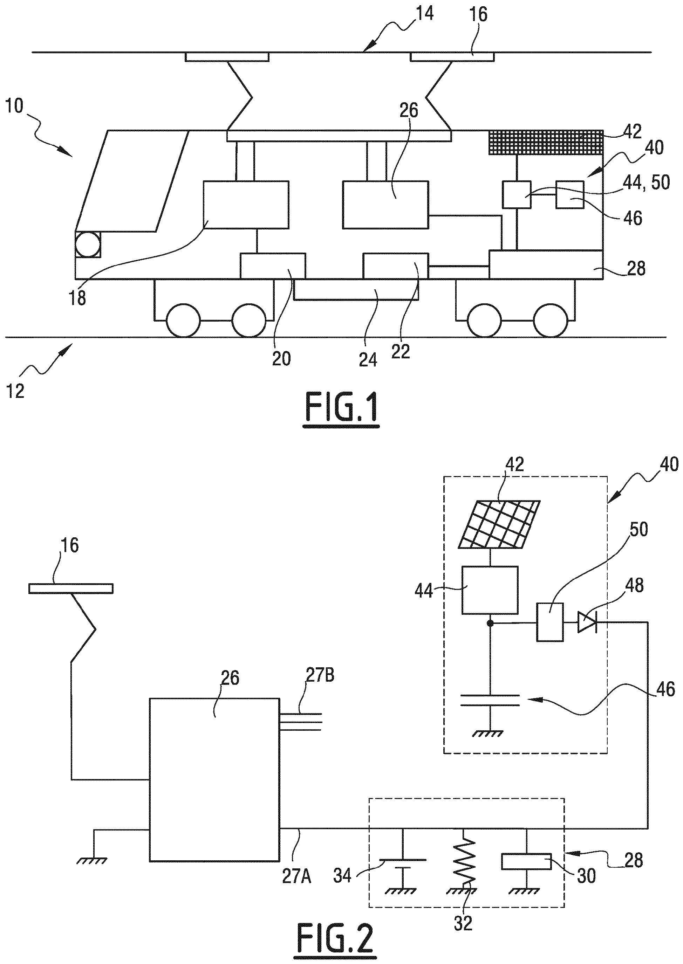

Un véhicule ferroviaire 10 est représenté sur la figure 1 circulant sur une voie ferrée 12 munie d'une caténaire 14. Le véhicule ferroviaire 10 comporte des patins 16 articulés pour venir au contact de la caténaire 14 qui constitue une source extérieure d'énergie électrique pour le véhicule ferroviaire 10.

De manière connue en soi, l'énergie électrique fournie par la source extérieure est transmise à travers les patins 16 à un convertisseur primaire 18 de puissance qui alimente au moins un moteur électrique 20 responsable de la propulsion du véhicule ferroviaire 10.

Le convertisseur primaire 18 de puissance est apte à transformer l'énergie électrique fournie par la source extérieure, par exemple délivrée sous forme de courant continu à haute tension, en une forme utilisable par le ou les moteurs électriques 20, par exemple sous forme de courant alternatif.

La source extérieure n'est pas toujours disponible pour l'alimentation du véhicule ferroviaire 10, par exemple, parce que la caténaire 14 peut être localement endommagée. Alternativement, le véhicule ferroviaire 10 peut être stationné dans un hangar pour une opération de maintenance, sans accès à la caténaire.

Le véhicule ferroviaire 10 comprend également un moteur secondaire 22 destiné à assurer la propulsion lorsque la source d'énergie extérieure n'est pas disponible. Le moteur secondaire 22 est par exemple un moteur diesel alimenté par du carburant contenu dans un réservoir 24.

Comme représenté sur les figures 1 et 2, le véhicule ferroviaire comprend également un convertisseur secondaire 26 de puissance connecté à la source extérieure à travers les patins 16.

Le convertisseur secondaire 26 de puissance est apte à transformer l'énergie électrique fournie par la source extérieure, par exemple délivrée sous forme de courant continu à haute tension. Le convertisseur secondaire 26 délivre ainsi l'énergie électrique transformée à la fois sous forme de courant continu, par une sortie continue 27A, et sous forme de courant alternatif triphasé, par une sortie triphasée 27B.

Le convertisseur secondaire 26 est apte à mettre en œuvre une isolation galvanique entre la source extérieure et les sorties continue 27A et alternative 27B, afin de protéger des circuits électriques connectés aux sorties 27A, 27B d'une surtension.

Le convertisseur secondaire 26 est connecté aux circuits secondaires 28 par la sortie continue 27A.

Les circuits secondaires 28 comprennent par exemple une électronique de contrôle 30, ainsi que des charges 32 regroupant notamment les circuits d'éclairage et de ventilation du véhicule ferroviaire 10.

Les circuits secondaires 28 comprennent également un dispositif de démarrage 34 du moteur secondaire 22. Le dispositif de démarrage 34 comprend par exemple une batterie, rechargée à travers le convertisseur secondaire 26 lorsque la source extérieure est disponible.

Le véhicule ferroviaire 10 comporte également un système 40 d'alimentation électrique auxiliaire apte à alimenter les circuits secondaires 28 du véhicule ferroviaire 10 pendant une durée limitée.

Par exemple, le système 40 est apte à fournir une puissance de 200 W, la durée limitée étant par exemple supérieure ou égale à 60 s.

Le système 40 comprend une source renouvelable 42 d'énergie électrique, un convertisseur auxiliaire 44 de puissance, un dispositif de stockage 46 d'énergie électrique et un dispositif d'isolation 48.

Le système 40 est apte à stocker dans le dispositif de stockage 46 une énergie électrique fournie par la source renouvelable 42, à travers le convertisseur auxiliaire 44. Il est également apte à délivrer une puissance auxiliaire aux circuits secondaires 28 à partir de l'énergie stockée dans le dispositif de stockage 46.

La source renouvelable 42 est par exemple un panneau de cellules photovoltaïques, aptes à transformer l'énergie des rayons solaires incidents en énergie électrique. Le panneau est disposé sur une paroi externe supérieure du véhicule ferroviaire 10, de sorte à maximiser son exposition aux rayons solaires.

Selon une première variante non représentée, la source renouvelable 42 est une turbine éolienne apte à transformer l'énergie d'un écoulement d'air en énergie électrique. L'écoulement d'air est par exemple le vent au voisinage du véhicule ferroviaire, ou bien un écoulement provoqué par le déplacement du véhicule ferroviaire 10 dans l'air. La turbine est par exemple disposée sur une paroi externe du véhicule ferroviaire 10, de sorte à maximiser son exposition aux écoulements d'air au voisinage du véhicule ferroviaire 10.

Selon une seconde variante non représentée, la source renouvelable 42 est un ensemble comprenant au moins un panneau de cellules photovoltaïques et/ou au moins une turbine éolienne, comme précédemment décrits.

Le convertisseur auxiliaire 44 est un convertisseur de puissance apte à transformer l'énergie électrique fournie par la source renouvelable 42 en une énergie électrique stockable dans le dispositif de stockage 46.

Le convertisseur auxiliaire 44 est par exemple un convertisseur de tension continue, apte à modifier une tension électrique continue sous laquelle est délivrée l'énergie par la source renouvelable 42. Ceci est notamment le cas quand la source renouvelable 42 est un panneau de cellules photovoltaïques.

En variante, le convertisseur 44 est apte à convertir une tension alternative sous laquelle est délivrée l'énergie par la source renouvelable 42, en une tension continue adaptée au dispositif de stockage 46. Ceci est notamment le cas quand la source renouvelable 42 est une turbine éolienne.

Le convertisseur auxiliaire 44 est dépourvu d'isolation galvanique. En effet, le convertisseur auxiliaire 44 n'est pas connecté à la source extérieure à haute tension, et ne nécessite donc pas d'isolation galvanique protégeant des circuits électriques d'une surtension. Le convertisseur auxiliaire 44 est donc un dispositif simple et peu coûteux.

Le dispositif de stockage 46 est apte à stocker l'énergie électrique fournie par la source renouvelable 42 et transmise à travers le convertisseur auxiliaire 44, et à restituer l'énergie stockée vers les circuits secondaires 28.

Le dispositif de stockage 46 est apte à stocker et à restituer une énergie supérieure ou égale à 6000 J, notamment supérieure ou égale à 10000 J.

Le dispositif de stockage 46 est pré-chargé en permanence, et l'énergie fournie par la source renouvelable 42 vient compenser les pertes qui déchargent le dispositif de stockage 46, par exemple celles dues à des courants de fuite.

Le dispositif de stockage 46 comporte un ou plusieurs condensateurs de haute capacité, par exemple deux condensateurs de capacité supérieure ou égale à 40 F, notamment de capacité comprise entre 45 F et 50 F.

Le ou les condensateurs présentent par exemple une tension à charge maximale supérieure à 40 V, notamment comprise entre 50 V et 60 V.

En variante, le dispositif de stockage 46 comporte au moins une batterie lithiumion.

Le dispositif d'isolation 48 est configuré pour isoler le système 40 du convertisseur secondaire 26, afin d'éviter des pertes dans les circuits secondaires 28. A cet effet, le dispositif d'isolation 48 est typiquement constitué d'une diode.

Selon une variante, le système 40 comporte également un convertisseur de sortie 50 connecté entre le dispositif de stockage 46 et le dispositif d'isolation 48, apte à transformer l'énergie électrique issue du dispositif de stockage 46 en une énergie électrique utilisable par les circuits secondaires 28, par exemple par un changement de tension.

Selon une autre variante (non représentée), le convertisseur auxiliaire 44 est un convertisseur à deux voies. Le convertisseur auxiliaire 44 est connecté à la fois entre la source renouvelable 42 et le dispositif de stockage 46, ainsi qu'entre le dispositif de stockage 46 et les circuits secondaires 28, à travers le dispositif d'isolation 48. Il met alors également en oeuvre les fonctions du convertisseur de sortie 50.

Le système 40 d'alimentation électrique auxiliaire est ainsi apte à stocker de l'énergie dans le dispositif de stockage 46 même en l'absence de la source extérieure, ce qui permet de fournir de l'énergie au véhicule ferroviaire 10 même après de longues périodes d'immobilisation après lesquelles la batterie du dispositif de démarrage 34 serait déchargée.

De plus, le système 40 est isolé des convertisseurs primaire 18 et secondaire 26, ainsi que de la source extérieure. Ceci permet de s'affranchir de l'isolation galvanique dans le convertisseur auxiliaire 44, qui est ainsi simple et peu coûteux, et permet également d'éviter des pertes de puissance dans les circuits primaires et les circuits secondaires 28.

Le dispositif de stockage 46 comporte un ou plusieurs condensateurs de haute capacité, par exemple deux condensateurs de capacité supérieure ou égale à 40 F, notamment de capacité comprise entre 45 F et 50 F.

Le ou les condensateurs présentent par exemple une tension à charge maximale supérieure à 40 V, notamment comprise entre 50 V et 60 V.

En variante, le dispositif de stockage 46 comporte au moins une batterie lithiumion.

Le dispositif d'isolation 48 est configuré pour isoler le système 40 du convertisseur secondaire 26, afin d'éviter des pertes dans les circuits secondaires 28. A cet effet, le dispositif d'isolation 48 est typiquement constitué d'une diode.

Selon une variante, le système 40 comporte également un convertisseur de sortie 50 connecté entre le dispositif de stockage 46 et le dispositif d'isolation 48, apte à transformer l'énergie électrique issue du dispositif de stockage 46 en une énergie électrique utilisable par les circuits secondaires 28, par exemple par un changement de tension.

Selon une autre variante (non représentée), le convertisseur auxiliaire 44 est un convertisseur à deux voies. Le convertisseur auxiliaire 44 est connecté à la fois entre la source renouvelable 42 et le dispositif de stockage 46, ainsi qu'entre le dispositif de stockage 46 et les circuits secondaires 28, à travers le dispositif d'isolation 48. Il met alors également en œuvre les fonctions du convertisseur de sortie 50.

Le système 40 d'alimentation électrique auxiliaire est ainsi apte à stocker de l'énergie dans le dispositif de stockage 46 même en l'absence de la source extérieure, ce qui permet de fournir de l'énergie au véhicule ferroviaire 10 même après de longues périodes d'immobilisation après lesquelles la batterie du dispositif de démarrage 34 serait déchargée.

De plus, le système 40 est isolé des convertisseurs primaire 18 et secondaire 26, ainsi que de la source extérieure. Ceci permet de s'affranchir de l'isolation galvanique dans le convertisseur auxiliaire 44, qui est ainsi simple et peu coûteux, et permet également d'éviter des pertes de puissance dans les circuits primaires et les circuits secondaires 28.

## Revendications

1. Véhicule ferroviaire (10) comprenant un convertisseur primaire (18) de puissance, alimentant au moins un moteur électrique (20), et un convertisseur secondaire (26) de puissance alimentant des circuits secondaires (28), à partir d'une source extérieure (14) d'énergie électrique,
le véhicule ferroviaire (10) comprenant en outre un système (40) d'alimentation électrique auxiliaire, le système (40) comprenant :
- un dispositif de stockage (46) d'énergie électrique ;
- une source renouvelable (42) d'énergie électrique; et
- un convertisseur auxiliaire (44) de puissance,
le système (40) étant apte à stocker dans le dispositif de stockage (46) une énergie électrique fournie par la source renouvelable (42) à travers le convertisseur auxiliaire (44), et apte à délivrer une puissance auxiliaire à partir de l'énergie stockée dans le dispositif de stockage (46),
le système (40) d'alimentation électrique auxiliaire étant isolé électriquement du convertisseur primaire (18) et du convertisseur secondaire (26), ainsi que de la source d'énergie extérieure (14),
le système (40) d'alimentation électrique auxiliaire étant configuré pour alimenter les circuits secondaires (28) lorsque la source extérieure (14) n'est pas disponible,
le système (40) comprenant, en outre, un dispositif d'isolation (48) configuré pour isoler le système (40) du convertisseur secondaire (26).

2. Véhicule ferroviaire (10) selon la revendication 1, dans lequel le système (40) est apte à délivrer la puissance auxiliaire à travers le convertisseur auxiliaire (44) ou à travers un convertisseur de sortie (50).

3. Véhicule ferroviaire (10) selon l'une quelconque des revendications 1 et 2, dans lequel la source renouvelable (42) d'énergie électrique comprend au moins un panneau de cellules photovoltaïques.

4. Véhicule ferroviaire (10) selon l'une quelconque des revendications précédentes, dans lequel la source renouvelable (42) d'énergie électrique comprend au moins une turbine éolienne.

5. Véhicule ferroviaire (10) selon l'une quelconque des revendications précédentes, dans lequel le dispositif de stockage (46) comprend au moins un condensateur, le ou chaque condensateur présentant de préférence une capacité supérieure ou égale à 40 F.

6. Véhicule ferroviaire (10) selon l'une quelconque des revendications précédentes, dans lequel le véhicule ferroviaire (10) comprend également un moteur secondaire (22), les circuits secondaires (28) comprenant un dispositif de démarrage (34) du moteur secondaire (22).

7. Véhicule ferroviaire (10) selon l'une quelconque des revendications précédentes, dans lequel les circuits secondaires (28) comprennent également une électronique de contrôle (30).

8. Véhicule ferroviaire (10) selon l'une quelconque des revendications précédentes, dans lequel le système (40) d'alimentation électrique auxiliaire est configuré pour alimenter les circuits secondaires (28) pendant une durée limitée, de préférence supérieure ou égale à 60 secondes.

9. Véhicule ferroviaire (10) selon l'une quelconque des revendications précédentes, dans lequel le dispositif de stockage (46) est pré-chargé et la source renouvelable (42) est adaptée pour fournir une énergie électrique compensant les pertes qui déchargent le dispositif de stockage (46).

10. Véhicule ferroviaire (10) selon l'une quelconque des revendications précédentes, dans lequel le dispositif d'isolation (48) est constitué d'une diode.

## Patentansprüche

1. - Schienenfahrzeug (10), umfassend einen primären Leistungswandler (18), der mindestens einen Elektromotor (20) speist, und einen sekundären Leistungswandler (26), der sekundäre Stromkreise (28) aus einer externen Quelle (14) elektrischer Energie speist,
das Schienenfahrzeug (10) ferner umfassend ein System (40) zur Hilfsstromversorgung, das System (40) umfassend:
- eine Speichervorrichtung (46) elektrischer Energie;
- eine erneuerbare Quelle (42) elektrischer Energie; und
- einen Hilfsleistungswandler (44),
wobei das System (40) angepasst ist, um in der Speichervorrichtung (46) elektrische Energie zu speichern, die von der erneuerbaren Quelle (42) über den Hilfswandler (44) geliefert wird, und angepasst ist, um aus der Energie, die in der Speichervorrichtung (46) gespeichert ist, eine Hilfsleistung zu liefern,
wobei das System (40) zur Hilfsstromversorgung elektrisch von dem primären Wandler (18) und dem sekundären Wandler (26) sowie von der externen Energiequelle (14) isoliert ist,
wobei das System (40) zur Hilfsstromversorgung konfiguriert ist, um die sekundären Stromkreise (28) mit Strom zu versorgen, wenn die externe Quelle (14) nicht verfügbar ist,
das System (40) ferner umfassend eine Isolationsvorrichtung (48) umfasst, die konfiguriert ist, um das System (40) von dem sekundären Wandler (26) zu isolieren.

2. - Schienenfahrzeug (10) nach Anspruch 1, wobei das System (40) angepasst ist, um die Hilfsleistung über den Hilfswandler (44) oder über einen Ausgangswandler (50) zu liefern.

3. - Schienenfahrzeug (10) nach einem der Ansprüche 1 oder 2, wobei die erneuerbare Quelle (42) elektrischer Energie mindestens eine Photovoltaikzellenplatte umfasst.

4. - Schienenfahrzeug (10) nach einem der vorherigen Ansprüche, wobei die erneuerbare Quelle (42) elektrischer Energie mindestens eine Windturbine umfasst.

5. - Schienenfahrzeug (10) nach einem der vorherigen Ansprüche, wobei die Speichervorrichtung (46) mindestens einen Kondensator umfasst, wobei der oder jeder Kondensator vorzugsweise eine Kapazität größer als oder gleich wie 40 F aufweist.

6. - Schienenfahrzeug (10) nach einem der vorherigen Ansprüche, wobei das Schienenfahrzeug (10) auch einen Sekundärmotor (22) umfasst, wobei die sekundären Stromkreise (28) eine Vorrichtung (34) zum Starten des Sekundärmotors (22) umfassen.

7. - Schienenfahrzeug (10) nach einem der vorherigen Ansprüche, wobei die sekundären Stromkreise (28) auch eine Steuerelektronik (30) umfassen.

8. - Schienenfahrzeug (10) nach einem der vorherigen Ansprüche, wobei das System (40) zur Hilfsstromversorgung konfiguriert ist, um die sekundären Stromkreise (28) über eine begrenzte Zeit, vorzugsweise größer als oder gleich wie 60 Sekunden, mit Strom zu versorgen.

9. - Schienenfahrzeug (10) nach einem der vorherigen Ansprüche, wobei die Speichervorrichtung (46) vorgeladen ist und die erneuerbare Quelle (42) angepasst ist, um elektrische Energie zu liefern, die Verluste ausgleicht, die Speichervorrichtung (46) entladen.

10. - Schienenfahrzeug (10) nach einem der vorherigen Ansprüche, wobei die Isolationsvorrichtung (48) aus einer Diode besteht.

## Claims

1. - A railway vehicle (10) comprising a primary power converter (18) supplying at least one electric motor (20) and a secondary power converter (26) supplying secondary circuits (28) from an external source (14) of electrical energy,
the railway vehicle (10) further comprising an auxiliary power supply system (40), the system (40) comprising:
- an electrical energy storage device (46);
- a renewable source (42) of electrical energy; and
- an auxiliary power converter (44),
the system (40) being adapted to store in the storage device (46) electrical energy supplied by the renewable source (42) through the auxiliary converter (44), and adapted to output auxiliary power from the energy stored in the storage device (46),
the auxiliary power supply system (40) being electrically isolated from the primary converter (18) and the secondary converter (26), as well as from the external power source (14),
the auxiliary power supply system (40) being configured to supply power to the secondary circuits (28) when the external source (14) is not available,
the system (40) further comprising an isolation device (48) configured to isolate the system (40) from the secondary converter (26).

2. - The railway vehicle (10) according to claim 1, wherein the system (40) is adapted to deliver the auxiliary power through the auxiliary converter (44) or through an output converter (50).

3. - The railway vehicle (10) according to any of claims 1 and 2, wherein the renewable source (42) of electrical energy comprises at least one panel of photovoltaic cells.

4. - The railway vehicle (10) according to any of the preceding claims, wherein the renewable source (42) of the railway vehicle comprises at least one wind turbine.

5. - The railway vehicle (10) according to any of the preceding claims, wherein the storage device (46) comprises at least one capacitor, the or each capacitor preferably having a capacitance greater than or equal to 40 F.

6. - The railway vehicle (10) according to any of the preceding claims, wherein the railway vehicle (10) further comprises a secondary engine (22), the secondary circuits (28) comprising a starter device (34) for the secondary engine (22).

7. - The railway vehicle (10) according to any of the preceding claims, wherein the secondary circuits (28) further comprise control electronics (30).

8. - The railway vehicle (10) according to any of the preceding claims, wherein the auxiliary power supply system (40) is configured to supply power to the secondary circuits (28) for a limited time, preferably greater than or equal to 60 seconds.

9. - The railway vehicle (10) according to any of the preceding claims, wherein the storage device (46) is pre-charged and the renewable source (42) is adapted to provide electrical energy to compensate for losses that discharge the storage device (46).

10. - The railway vehicle (10) according to any of the preceding claims, wherein the isolation device (48) consists of a diode.
